**Europäisches Patentamt**

**European Patent Office**

**Office européen des brevets**

(11) Veröffentlichungsnummer: **0 050 741**
**B1**

(12) ## EUROPÄISCHE PATENTSCHRIFT

(45) Veröffentlichungstag der Patentschrift:
07.09.83

(51) Int. Cl.³: **F 26 B  11/04,** F 26 B  25/02,
F 27 B  7/22

(21) Anmeldenummer: 81107602.5

(22) Anmeldetag: **24.09.81**

(54) **Drehtrommel mit kombinierter Lagerung und Antrieb.**

(30) Priorität. 29.10.80  DE 3040716

(43) Veröffentlichungstag der Anmeldung:
05.05.82 Patentblatt 82/18

(45) Bekanntmachung des Hinweises auf die Patenterteilung:
07.09.83 Patentblatt 83/36

(84) Benannte Vertragsstaaten:
AT BE CH FR GB IT LI NL

(56) Entgegenhaltungen·
**DE-A-2 531 589**
**DE-C-569 500**
**FR-A-2 242 890**
**GB-A-2 006 349**
**US-A-1 971 474**

(73) Patentinhaber: **BUCKAU - WALTHER Aktiengesellschaft,**
**Lindenstrasse 43, D-4048 Grevenbroich 1 (DE)**

(72) Erfinder: **von Christen, Franz Eicke, Strunderfeld 24a,**
**D-5000 Köln 80 (DE)**
Erfinder: **Melchert, Friedrich, Kettnerweg 8,**
**D-5060 Bergisch-Gladbach 1 (DE)**

## Drehtrommel mit kombinierter Lagerung und Antrieb

Die Erfindung betrifft eine Drehtrommel mit an beiden Enden vorgesehenen Trommellagerungen mit auf dem Trommelmantel aufgebrachten Lagerringen, die ein Los- und ein Festlager bilden, wobei im Bereich des Festlagers ein Drehkranz vorgesehen ist, in den das Ritzel eines Antriebes eingreift.

Derartige Trommeln sind als Trockentrommeln, Drehrohröfen od. dgl. eingesetzt. Sie werden vielfach mit sehr hohen Innentemperaturen betrieben. Für die Lagerung sind die Trommeln mit zwei äußeren Laufringen versehen, die jeweils auf zwei oder mehr selbständig gelagerten Tragrollen abgestützt sind. Für den Trommelantrieb ist ein weiterer Zahnkranz vorgesehen, in den das Ritzel des Antriebes eingreift. Eine solche Vorrichtung ist z. B. aus der FR-A-2 242 890 bekannt.

Die beiden Laufringe und der Zahnkranz bilden gemeinsam eine statisch unbestimmte Abstützung. Jedes Lagerteil, bestehend aus Laufring und Laufrollen, sowie der Antrieb, bestehend aus Zahnkranz und Antriebsritzel mit Antrieb, müssen einzeln ausgerichtet und außerdem alle drei Teile aufeinander abgestimmt werden. Die bekannte Lagerung mit Antrieb bedingt eine aufwendige Fertigung und eine komplizierte Montage.

Der Erfindung liegt die Aufgabe zugrunde, für die Lagerung und den Antrieb der Drehtrommel eine statisch bestimmte Abstützung zu schaffen und gleichzeitig den durch Herstellung und Montage bedingten Aufwand zu verringern.

Diese Aufgabe wird dadurch gelöst, daß die Trommellagerungen aus Kugeldrehverbindungen gebildet sind, die jeweils aus zwei L-förmigen Kugeldrehringen bestehen, von denen einer mit seinem langen Schenkel fest mit dem äußeren Mantel der Drehtrommel und der andere mit seinem langen Schenkel mit einer raumfesten Vorrichtung verbunden ist und der raumfeste Kugeldrehring mit seinem freien Schenkel den freien Schenkel des mit der Drehtrommel befestigten Kugeldrehringes mit Abstand untergreift, wobei die Lagerkugeln zwischen den beiden freien Kugellagerringe bildenden Schenkeln gelagert sind und daß der als Zahnkranz ausgebildete Drehkranz mit dem an der Drehtrommel befestigten Kugeldrehring des Festlagers an dessen Außenseite verbunden ist und das Antriebsritzel des Antriebes in den Zahndrehkranz eingreift.

Aufgrund der erfindungsgemäßen Maßnahme bilden die Lagerung und der Antrieb eine 2-Punkt-Abstützung, die mit einfachsten Mitteln abgestützt werden können. Die Montage wird wesentlich vereinfacht, weil die Lagerung nahezu komplett werkstattmäßig erstellt werden kann.

Der besondere Vorteil der erfindungsgemäßen Lagerung ist darin zu sehen, daß die von der inneren Trommeltemperatur ausgehende Erwärmung des äußeren Trommelmantels nahezu keinen Einfluß auf die Lagerung hat. Wenn sich der mit der Trommel verbundene Kugeldrehring stärker erwärmt und damit stärker ausdehnt als der raumfeste Kugeldrehring, so ergeben sich keine den Betriebsablauf störenden Wärmespannungen im Bereich der Lagerkugeln. Würden die Kugeldrehringe umgekehrt angebracht, dann werden die Kugellaufflächen aufgrund der Wärmedehnungen zusammengedrückt und ergeben eine den Betriebsablauf störende Pressung. Die beiden Kugeldrehringe können dabei so stark auf die Kugeln gepreßt werden, daß es zum Stillstand der Anlage kommt.

Ein Ausführungsbeispiel der Erfindung ist in der Zeichnung dargestellt und wird im nachfolgenden näher beschrieben.

Es zeigt

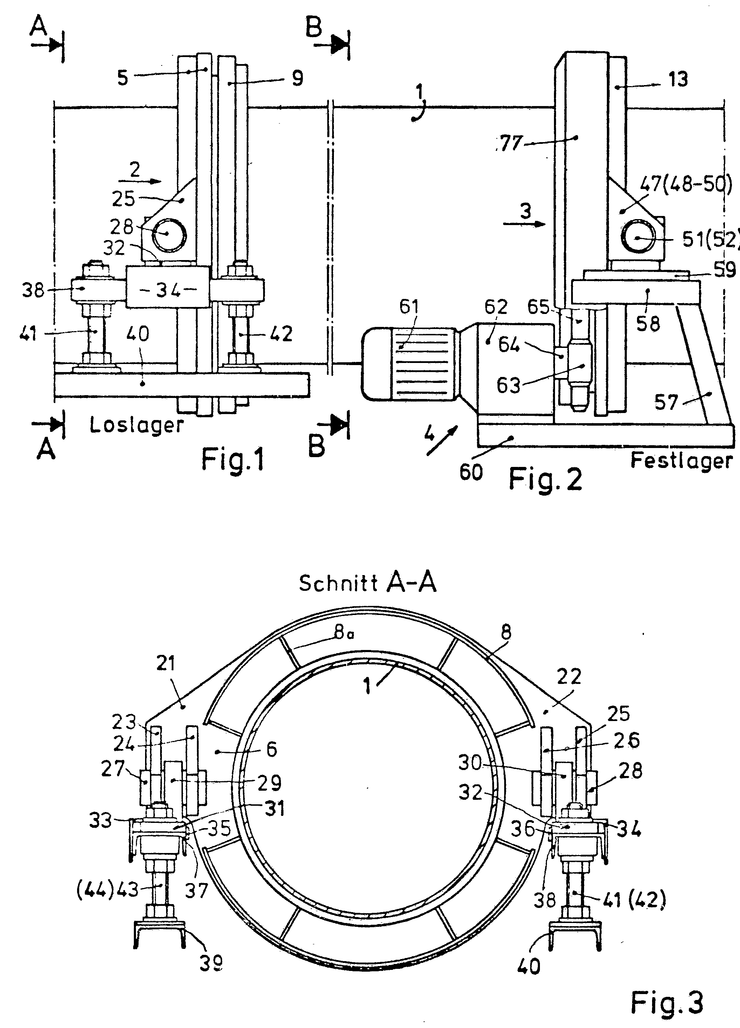

Fig. 1 die Trommel in Teilansicht mit dem Loslager,

Fig. 2 die Trommel in Teilansicht mit dem Festlager, und teilweise aufgebrochenem Abdeckblech,

Fig. 3 einen Schnitt gemäß Linie A-A in Fig. 1,

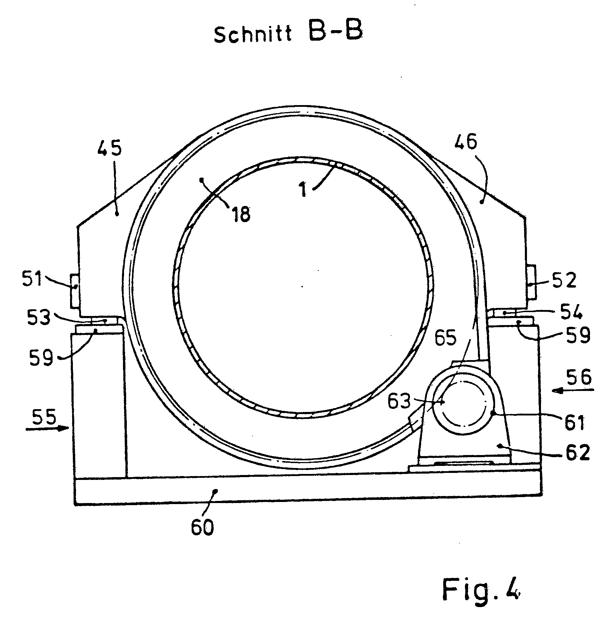

Fig. 4 einen Schnitt gemäß Linie B-B in Fig. 2,

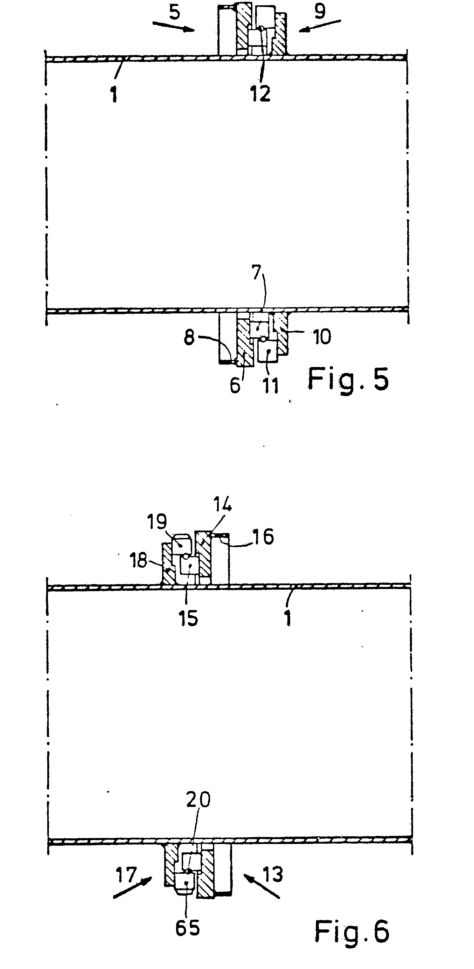

Fig. 5 eine schematische Darstellung des Loslagers, jedoch ohne Abdeckblech,

Fig. 6 eine schematische Darstellung des Festlagers, jedoch ohne Abdeckblech,

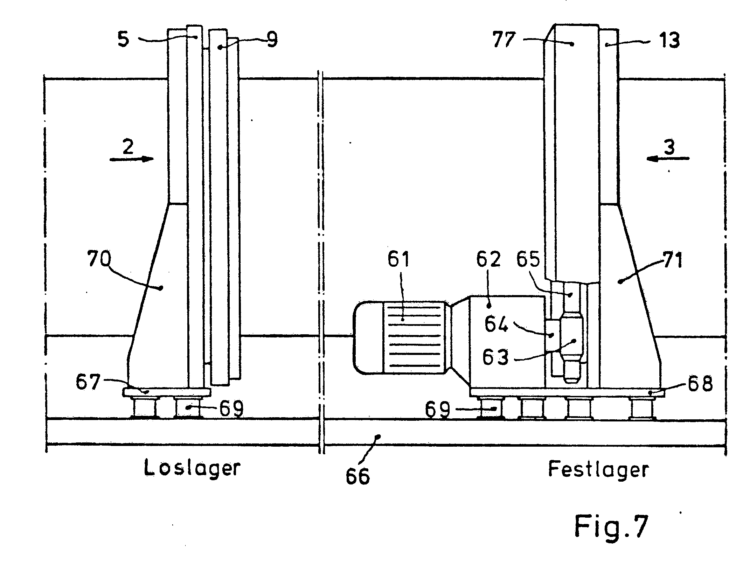

Fig. 7 eine weitere Ausführungsform mit Teilansichten der Trommel und teilweise aufgebrochenem Abdeckblech.

Die Drehtrommel 1 ist in einem Loslager 2 und einem Festlager 3 mit horizontaler Längsachse gelagert. Der Antrieb 4 befindet sich im Bereich des Festlagers 3.

Die Lagerung besteht aus Kugeldrehverbindungen, von denen ein Teil fest mit Drehtrommel 1 und der andere Teil raumfest angeordnet ist. Zwischen diesen Teilen befinden sich die ein Kugellager bildenden Kugeln.

Das Loslager 2 besteht u. a. aus einem L-förmigen Kugeldrehring 5, der aus einem langen Schenkel 6 und einem kurzen Schenkel 7 besteht. Außerdem ist ein Verstärkungsring 8 mit Verstärkungsstegen 8a vorgesehen. Dem raumfest angeordneten Kugeldrehring 5 ist ein weiterer L-förmiger Kugeldrehring 9 des Loslagers 2 zugeordnet, der ebenfalls aus einem langen Schenkel 10 und einem kurzen Schenkel 11 besteht, wobei der Schenkel 10 fest mit der Drehtrommel 1 verbunden ist. Zwischen den Schenkeln 7 und 11 befinden sich die Kugeln 12, die die Kugeldrehverbindung vervollständigen.

Das Festlager 3 besteht ebenfalls aus 2 L-förmigen Kugeldrehringen 13 und 17, wobei der Ring 13 aus einem langen Schenkel 14, einem kurzen Schenkel 15 und einem Verstärkungsring 16 mit Verstärkungsstegen gebildet ist. Der Ring 17 besteht aus einem langen Schenkel 18 und einem kurzen Schenkel 19. Auch hier ist der Kugeldrehring 17 fest mit Drehtrommel 1 verbunden und der Kugeldrehring 13 raumfest angeordnet. Zwischen den Schenkeln 15 und 19 befinden sich die Kugeln 20.

Die raumfeste Abstützung des Kugeldrehringes 5 weist zwei Tragbleche 21 und 22 auf, die fest mit dem Ring 5 verbunden sind. An dem Tragblech 21 sind zwei lotrecht verlaufende Tragstege 23 und 24 und an dem Tragblech 22 zwei Tragstege 25 und 26 jeweils mit Abstand befestigt. Die Stege 23 bis 26 sind mit nicht näher bezeichneten Bohrungen versehen, durch die Drehbolzen 27 und 28 hindurchgeführt sind. Auf den Drehbolzen 27 und 28 ist jeweils ein Tragarm 29 und 30 drehbar gelagert, wobei jeder dieser Arme mit einem Gleitschuh 31 und 32 versehen ist. Diese Gleitschuhe sind auf zwei Stützböcken 37 und 38 abgestützt und jeweils von einer äußeren 33, 34 und einer inneren Gleitschiene 35, 36 geführt. Über die Stanz- und Halteschrauben mit Muttern 41 bis 44 sind die Stützböcke 37 und 38 auf Fundamentstegen 39 und 40 abgestützt. Aufgrund dieser Ausgestaltung kann sich der Kugeldrehring 5 um die Drehbolzen 27 und 28 geringfügig verdrehen und außerdem parallel zur Trommellängsachse auf den Stützböcken 37 und 38 verschieben.

Der Kugeldrehring 13 des Festlagers 3 besitzt ebenfalls zwei Tragbleche 45 und 46, an denen Tragstege 47 bis 50 zur Halterung der Drehbolzen 51 und 52 befestigt sind. Auf den Drehbolzen 51 und 52 sind Tragarme 53 und 54 gelagert, die fest auf den Stützböcken 55 und 56 abgestützt sind. Stützbeine 57, Tragplatten 58 und Distanzplatten 59 bilden das Traggerüst der Stützböcke 55 und 56 zum Abstützen auf den Fundamentstegen 60. Auf einem dieser Stege 60 ist der Antrieb 4 abgestützt, der aus einem Motor 61, einem Getriebe 62, einer Getriebewelle 64 mit darauf befestigtem Antriebsritzel 63 besteht. Dieses Ritzel 63 greift in einen Zahndrehkranz 65 ein, der am äußeren Umfang des Kugeldrehringes 17 befestigt ist. Auch kann der Flansch 19 an seiner äußeren Umfangsfläche als Zahnkranz ausgebildet sein.

Das Loslager 2 und das Festlager 3 können auch in der Weise abgestützt sein, daß Tragbleche 70 des Kugeldrehringes 5 bzw. Tragbleche 71 des Kugeldrehringes 13 auf Tragplatten 67 und 68 abgestützt sind, die wiederum über elastische Stützböcke 69 auf dem Fundamentrahmen 66 sitzen. Dabei sind die Tragbleche 70 in nicht dargestellter Weise gegenüber den Tragplatten 67 verschiebbar. Die Tragbleche 71 sind mit den Tragplatten 68 fest verbunden.

Die Stützböcke 69 können beispielsweise aus gummiartigen Federelementen oder aus Stahlfedern bestehen. In beiden Ausführungsbeispielen ist das Festlager mit einem Abdeckblech 77 umgeben.

Aufgrund der Wärmespannungen kann es möglich sein, daß sich die fest mit der Drehtrommel 1 verbundenen Kugeldrehringe 9 und 17 stärker ausdehnen als die raumfest angeordneten Kugeldrehringe 5 und 13. Um auch in diesem Falle jederzeit eine ausreichende Tragfähigkeit der Kugeldrehverbindung zu gewährleisten, können die Kugeln 12 und 20 in segmentförmig unterteilten Halteringen abgestützt sein, die innerhalb der Schenkel 11 und 19 untergebracht sind und mittels Federelementen für den notwendigen Anpreßdruck sorgen.

**Patentansprüche**

1. Drehtrommel mit an beiden Enden vorgesehenen Trommellagerungen mit auf dem Trommelmantel aufgebrachten Lagerringen, die ein Los- und ein Festlager bilden, wobei im Bereich des Festlagers ein Drehkranz vorgesehen ist, in den das Ritzel eines Antriebes eingreift, dadurch gekennzeichnet, daß die Trommellagerungen (2 und 3) aus Kugeldrehverbindungen gebildet sind, die jeweils aus zwei L-förmigen Kugeldrehringen (5 und 9 bzw. 13 und 17) bestehen, von denen einer mit seinem langen Schenkel (10, 18) fest mit dem äußeren Mantel der Drehtrommel (1) und der andere mit seinem langen Schenkel (6, 14) mit einer raumfesten Vorrichtung (21, 22 bzw. 45, 46) verbunden ist und der raumfeste Kugeldrehring (5, 13) mit seinem freien Schenkel (7, 15) den freien Schenkel (11, 19) des mit der Drehtrommel (1) befestigten Kugeldrehringes (8, 17) untergreift, wobei die Lagerkugeln (12, 20) zwischen den beiden freien Kugellagerringe bildenden Schenkeln (7, 11 bzw. 15, 19) gelagert sind und daß der als Zahnkranz (65) ausgebildete Drehkranz mit dem an der Drehtrommel befestigten Kugeldrehring (18) des Festlagers (3) an dessen Außenseite verbunden ist und das Antriebsritzel des Antriebes (61, 62) in den Zahndrehkranz (65) eingreift.

2. Drehtrommel nach Anspruch 1, dadurch gekennzeichnet, daß der raumfest angeordnete Kugeldrehring (5, 13) über raumfeste Vorrichtungen (70, 71) mit einem oder mehreren elastischen Elementen (69) verbunden ist.

3. Drehtrommel nach Anspruch 1, dadurch gekennzeichnet, daß die beiden raumfest angeordneten Kugeldrehringe (5, 13) jeweils um eine quer zur Drehtrommellängsachse verlaufenden Achse (27, 28 bzw. 51, 52) schwenkbar angeordnet sind.

4. Drehtrommel nach den Ansprüchen 1 bis 3, dadurch gekennzeichnet, daß die Vorrichtungen (23 bis 32) zum Verschwenken des raumfest angeordneten Kugeldrehringes (5) des Loslagers (2) parallel zur Trommellängsachse verschiebbar angeordnet sind.

5. Drehtrommel nach den Ansprüchen 1 bis 4, dadurch gekennzeichnet, daß die raumfesten Kugeldrehringe (5, 13) dem jeweiligen Trommelende am nächsten liegen.

**Claims**

1. A rotary drum having drum mountings provided at both ends and with bearing rings arranged on the drum wall, which rings respectively form a free bearing and a fixed bearing, a ring mounting being provided in the region of the fixed bearing, in which mounting engages the pinion of a drive means, characterised in the drum mountings (2 and 3) are formed of rotary ball connections, which respectively consist of two L-shaped rotary ball races (5 and 9 or 13 and 17), of which one is connected by a long arm (10, 18) thereof fast to the outer wall of the rotary drum (1) and of which the other is connected by a long arm (6, 14) thereof to a spatially fixed device (21, 22 and 45, 46, respectively) and the spatially fixed rotary ball race (5, 13) engages by a free arm (7, 15) thereof beneath the free arm (11, 19) of the rotary ball race (8, 17) fixed to the rotary drum (1), the bearing balls (12, 20) being mounted between the two arms (7, 11 and 15, 19 respectively) forming free ball bearing races, and wherein the ring mounting formed as a toothed mounting (65) is connected to that ball race (18) of the fixed bearing (3) which is fixed on the rotary drum and on the outside thereof and the driving pinion of the drive means (61, 62) is in mesh with the ring gear (65).

2. A rotary drum according to claim 1, characterised in that the fixedly arranged ball race (5, 13) is connected by way of fixed devices (70, 71) to one or more resilient elements (69).

3. A rotary drum according to claim 1, characterised in that the two fixedly arranged ball races (5, 13) are respectively arranged to be swivellable about a shaft or pivot (27, 28 and 51, 52, respectively) extending transversely of the longitudinal axis of the rotary drum.

4. A rotary drum according to claims 1 to 3, characterised in that the means (23 to 32) for the swivelling of the fixedly arranged ball race (5) of the free bearing (2) are arranged to be displaceable parallel to the longitudinal axis of the drum.

5. A rotary drum according to claims 1 to 4, characterised in that the fixed ball races (5, 13) are disposed closest to the respective end of the drum.

## Revendications

1. Tambour rotatif équipé à ses deux extrémités de dispositifs de montage comportant des couronnes de portée montées sur l'enveloppe du tambour et constituant un palier libre et un palier fixe, une couronne rotative étant prévue à proximité du palier fixe, dans laquelle engrène le pignon d'un mécanisme d'entraînement, tambour caractérisé par le fait que les dispositifs de montage (2 et 3) sont réalisés sous la forme de liaisons tournantes à billes qui comprennent chacune deux couronnes rotatives (5 et 9 ou 13 et 17) à billes, de sections en L, dont l'une est assujettie par sa branche longue (10, 18) à l'enveloppe du tambour rotatif (1) et l'autre est reliée par sa branche longue (6, 14) à un dispositif (21, 22 ou 45, 46) assujetti au bâti, la couronne rotative (5, 13) à billes assujettie au bâti venant en prise par-en-dessous, par sa branche libre (7, 15), avec la branche libre (11, 19) de la couronne rotative (8, 17) à billes fixée au tambour rotatif (1), les billes de roulement (12, 20) étant montées entre les deux branches libres (7, 11 ou 15, 19) formant des bagues de roulement des billes; et par le fait que la couronne rotative réalisée sous la forme d'une couronne dentée (65) est reliée à la couronne rotative (18) à billes du palier fixe (3) assujettie au tambour rotatif, à la face externe de cette couronne, le pignon menant du mécanisme d'entraînement (61, 62) engrenant dans ladite couronne dentée rotative (65).

2. Tambour rotatif selon la revendication 1, caractérisé par le fait que la couronne rotative (5, 13) à billes assujettie au bâti est reliée, par l'intermédiaire de dispositifs (70, 71) solidaires du bâti, à un ou plusieurs éléments élastiques (69).

3. Tambour rotatif selon la revendication 1, caractérisé par le fait que les deux couronnes rotatives (5, 13) à billes, assujetties au bâti, sont respectivement montées pivotantes autour d'un axe (27, 28) ou (51, 52) perpendiculaire à l'axe longitudinal du tambour rotatif.

4. Tambour rotatif selon les revendications 1 à 3, caractérisé par le fait que les dispositifs (23 à 32), destinés à faire pivoter la couronne rotative (5) à billes du palier libre (2), assujettie au bâti, sont mobiles parallèlement à l'axe longitudinal dudit tambour.

5. Tambour rotatif selon les revendications 1 à 4, caractérisé par le fait que les couronnes rotatives (5, 13) à billes, assujetties au bâti, sont situées à proximité immédiate de chaque extrémité respective du tambour.

Fig.1

Loslager

Fig.2

Festlager

Schnitt A-A

Fig.3

Schnitt B-B

Fig. 4

Fig. 5

Fig. 6

Fig.7